(19) Europäisches Patentamt
European Patent Office
Office européen des brevets

(11) EP 4 151 663 A1

(12) EUROPEAN PATENT APPLICATION
published in accordance with Art. 153(4) EPC

(43) Date of publication:
**22.03.2023 Bulletin 2023/12**

(21) Application number: **21804251.3**

(22) Date of filing: **12.05.2021**

(51) International Patent Classification (IPC):
***C08C 19/00*** *(2006.01)* ***C08F 36/06*** *(2006.01)*
***C08L 15/00*** *(2006.01)*

(52) Cooperative Patent Classification (CPC):
**C08C 19/00; C08F 36/06; C08L 15/00;** Y02T 10/86

(86) International application number:
**PCT/JP2021/018012**

(87) International publication number:
**WO 2021/230279 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2020 JP 2020085119**

(71) Applicant: **Kuraray Co., Ltd.**
**Kurashiki-shi, Okayama 710-0801 (JP)**

(72) Inventors:
- **UENO, Yoshikazu**
**Kamisu-shi, Ibaraki 314-0197 (JP)**
- **UEHARA, Yosuke**
**Kamisu-shi, Ibaraki 314-0197 (JP)**
- **MOMOI, Nana**
**Kamisu-shi, Ibaraki 314-0197 (JP)**

(74) Representative: **Müller-Boré & Partner Patentanwälte PartG mbB**
**Friedenheimer Brücke 21**
**80639 München (DE)**

(54) **MODIFIED LIQUID DIENE-BASED RUBBER, RUBBER COMPOSITION, SEALING MATERIAL**

(57) The present invention provides a modified liquid diene rubber that is capable of giving a crosslinked product with excellent adhesion evaluated in terms of shear bond strength, a rubber composition including the modified liquid diene rubber, and a sealing material obtained from the rubber composition. A modified liquid diene rubber (A) has a functional group (a) derived from an acid anhydride, and contains butadiene units in an amount of 50 mass% or more based on the total monomer units, and the polystyrene-equivalent weight average molecular weight (Mw) measured by gel permeation chromatography (GPC) is in the range of 5,000 to 50,000.

EP 4 151 663 A1

## Description

TECHNICAL FIELD

The present invention relates to a modified liquid diene rubber, a rubber composition containing the modified liquid diene rubber, and a sealing material including the rubber composition.

BACKGROUND ART

Rubber compositions including liquid rubbers have outstanding adhesive properties and, by being crosslinked, give crosslinked products which exhibit excellent adhesion with respect to adherends and other surfaces. Also, modified liquid diene rubbers modified with $\alpha,\beta$-unsaturated carboxylic acids or others have high affinity with polar materials such as metals, and rubber compositions containing such modified liquid diene rubbers can be expected to have improved properties such as adhesion. For example, vulcanized products of rubber compositions including diene rubbers and modified liquid diene rubbers modified with $\alpha,\beta$-unsaturated carboxylic or others have conventionally been considered for tires and other rubber goods (see, for example, Patent Literature 1).

CITATION LIST

PATENT LITERATURE

Patent Literature 1: JP-S59-006272A

SUMMARY OF INVENTION

TECHNICAL PROBLEM

However, although conventional rubber compositions improve processability, they do not always provide excellent shear bond strength of their crosslinked products. In particular, when these compositions are used as sealing materials, adhesion to members made of various materials is required. The present invention has been made in light of the circumstances discussed above, and provides a modified liquid diene rubber that is capable of giving a crosslinked product with excellent adhesion evaluated in terms of shear bond strength, a rubber composition including the modified liquid diene rubber, and a sealing material obtained from the rubber composition.

SOLUTION TO PROBLEM

The present inventors carried out extensive studies and have found that a specific modified liquid diene rubber gives a crosslinked product with excellent adhesion evaluated in terms of shear bond strength. The present invention has been completed based on the finding.

Specifically, the present invention pertains to the following [1] to [11].

[1] A modified liquid diene rubber (A),

having a functional group (a) derived from an acid anhydride, and
containing butadiene units in an amount of 50 mass% or more based on the total monomer units,
wherein the polystyrene-equivalent weight average molecular weight (Mw) measured by gel permeation chromatography (GPC) is in the range of 5,000 to 50,000.

[2] The modified liquid diene rubber (A) described in [1], wherein the modified liquid diene rubber (A) is a product of reaction of a liquid diene rubber modified with an unsaturated carboxylic acid anhydride, and a compound represented by the chemical formula (2) or (3) below:

$$R^a\text{-OH} \qquad (2)$$

(wherein $R^a$ is a hydrogen atom or an optionally substituted alkyl group)

$$R^b_2\text{-NH} \qquad (3)$$

(wherein $R^b$ at each occurrence is a hydrogen atom or an optionally substituted alkyl group and may be the same as or different from one another).

[3] The modified liquid diene rubber (A) described in [1] or [2], wherein the weight average molecular weight (Mw) is in the range of 10,000 to 35,000.

[4] A rubber composition comprising the modified liquid diene rubber (A) described in any of [1] to [3].

[5] The rubber composition described in [4], further comprising a solid rubber (B).

[6] The rubber composition described in [4] or [5], further comprising a filler.

[7] The rubber composition described in [6], wherein the filler includes calcium carbonate.

[8] The rubber composition described in any of [4] to [7], further comprising a crosslinking agent.

[9] A sealing material obtained from the rubber composition described in any of [4] to [8].

[10] A crosslinked product obtained from the rubber composition described in any of [4] to [8].

[11] A sealing material obtained from the crosslinked product described in [10].

ADVANTAGEOUS EFFECTS OF INVENTION

The present invention can provide a modified liquid diene rubber that is capable of giving a crosslinked product with excellent adhesion evaluated in terms of shear bond strength, a rubber composition including the modified liquid diene rubber, and a sealing material obtained from the rubber composition.

DESCRIPTION OF EMBODIMENTS

[Modified liquid diene rubbers (A)]

A modified liquid diene rubber (A) of the present invention has a functional group (a) derived from an acid anhydride, and contains butadiene units in an amount of 50 mass% or more based on the total monomer units, and the polystyrene-equivalent weight average molecular weight (Mw) measured by gel permeation chromatography (hereinafter, also referred to as the "GPC") is in the range of 5,000 to 50,000.

Such a modified liquid diene rubber (A) and a rubber composition including the modified liquid diene rubber (A) have excellent adhesion with respect to other materials, for example, shear bond strength of a crosslinked product of the rubber composition.

For example, the modified liquid diene rubber (A) may be produced by adding a modifying agent which corresponds to the functional group (a) derived from an acid anhydride, to an unmodified liquid diene rubber (A').

The unmodified liquid diene rubber (A') includes butadiene units in an amount of 50 mass% or more based on the total monomer units constituting the polymer. The content of butadiene units is preferably 60 to 100 mass%, and more preferably 70 to 100 mass%, based on the total monomer units of the liquid diene rubber (A'). Also, in a preferred embodiment, butadiene units included in the liquid diene rubber (A') are 100 mass% (that is, all of the monomer units included in the liquid diene rubber (A') are butadiene units).

Examples of other monomer units than butadiene units that can be included in the liquid diene rubber (A') include conjugated diene (a1) units other than butadiene.

Examples of the conjugated dienes (a1) include isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene and chloroprene. Of these conjugated dienes (a1), isoprene and farnesene are preferable.

The farnesene may be either α-farnesene or β-farnesene represented by the following formula (1), but from the point of view of ease of producing the liquid diene polymer (A), β-farnesene is preferable. α-farnesene and β-farnesene may be used in combination.

[Chem. 1]

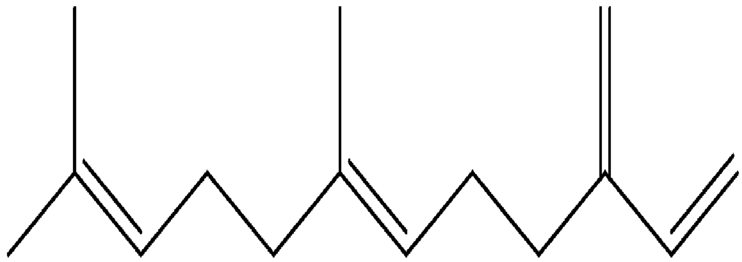

(1)

The conjugated dienes (a1) may be used singly, or two or more may be used in combination.

The content of the other monomer units than butadiene units in the unmodified liquid diene rubber (A') is preferably not more than 50 mass%, more preferably not more than 40 mass%, and still more preferably not more than 30 mass%.

The vinyl content in the unmodified liquid diene rubber (A') is preferably not more than 99 mol%, more preferably not more than 90 mol%, still more preferably not more than 50 mol%, even more preferably not more than 20 mol%, and particularly preferably not more than 10 mol%. The vinyl content in the unmodified liquid diene rubber (A') is preferably not less than 1 mol%, more preferably not less than 3 mol%, and still more preferably not less than 5 mol%. In the present invention, the "vinyl content" means the total molar percentage of 1,2-bonded, 3,4-bonded (for other than farnesene), and 3,13-bonded (for farnesene) conjugated diene units (conjugated diene units except 1,4-bonded (for other than farnesene) and 1,13-bonded (for farnesene) conjugated diene units) relative to the total of the conjugated diene units in the unmodified liquid diene rubber (A') taken as 100 mol%. The vinyl content is determined by $^1$H-NMR based on the area ratio of the peaks assigned to structural units derived from 1,2-bonded, 3,4-bonded (for other than farnesene), and 3,13-bonded (for farnesene) conjugated dienes and the peaks assigned to structural units derived from 1,4-bonded (for other than farnesene) and 1,13-bonded (for farnesene) conjugated dienes.

As the unmodified liquid diene rubber (A'), a polymer obtained by polymerizing butadiene and other monomers than butadiene included as necessary by, for example, emulsion polymerization, solution polymerization, or other methods is preferable.

The emulsion polymerization may be performed by a process that is known or deemed as known. For example, predetermined amounts of monomers including a conjugated diene are emulsified and dispersed in the presence of an emulsifier, and are emulsion polymerized with a radical polymerization initiator.

Examples of the emulsifiers include long-chain fatty acid salts having 10 or more carbon atoms, and rosin acid salts. Examples of the long-chain fatty acid salts include potassium salts and sodium salts of fatty acids such as capric acid, lauric acid, myristic acid, palmitic acid, oleic acid and stearic acid.

The dispersant is usually water and may include a watersoluble organic solvent such as methanol or ethanol as long as the stability during polymerization is not impaired.

Examples of the radical polymerization initiators include persulfate salts such as ammonium persulfate and potassium persulfate, organic peroxides and hydrogen peroxide.

A chain transfer agent may be used to control the molecular weight of the unmodified liquid diene rubber (A') that is obtained. Examples of the chain transfer agents include mercaptans such as t-dodecylmercaptan and n-dodecylmercaptan; carbon tetrachloride, thioglycolic acid, diterpene, terpinolene, $\gamma$-terpinene and $\alpha$-methylstyrene dimer.

The temperature of the emulsion polymerization may be selected appropriately in accordance with factors such as the type of the radical polymerization initiator used, but is usually in the range of 0 to 100°C, and preferably in the range of 0 to 60°C. The polymerization mode may be continuous or batchwise.

The polymerization reaction may be terminated by the addition of a polymerization terminator. Examples of the polymerization terminators include amine compounds such as isopropylhydroxylamine, diethylhydroxylamine and hydroxylamine, quinone compounds such as hydroquinone and benzoquinone, and sodium nitrite.

The termination of the polymerization reaction may be followed by the addition of an antioxidant as required. After the termination of the polymerization reaction, the latex obtained is cleaned of the unreacted monomers as required, and the unmodified liquid diene rubber (A') is coagulated by the addition of a coagulant salt such as sodium chloride, calcium chloride or potassium chloride optionally together with an acid such as nitric acid or sulfuric acid to control the pH of the coagulated system to a predetermined value. The dispersant is then separated, thereby recovering the unmodified liquid diene rubber (A'). Next, the rubber is washed with water, then dehydrated and dried, thereby obtaining

the unmodified liquid diene rubber (A'). During the coagulation process, the latex may be mixed together with an emulsified dispersion of an extender oil as required, and the unmodified liquid diene rubber (A') may be recovered as an oil-extended rubber.

The solution polymerization may be performed by a process that is known or deemed as known. For example, monomers including a conjugated diene are polymerized in a solvent using a Ziegler catalyst, a metallocene catalyst, or an active metal or active metal compound capable of catalyzing anionic polymerization, optionally in the presence of a polar compound.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

Examples of the active metals capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium.

Among the active metals capable of catalyzing anionic polymerization, alkali metals and alkaline earth metals are preferable, and alkali metals are more preferable.

Preferred active metal compounds capable of catalyzing anionic polymerization are organoalkali metal compounds. Examples of the organoalkali metal compounds include organomonolithium compounds such as methyllithium, ethyllithium, n-butyllithium, sec-butyllithium, t-butyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene and potassium naphthalene. Among these organoalkali metal compounds, organolithium compounds are preferable, and organomonolithium compounds are more preferable.

The amount in which the organoalkali metal compound is used may be appropriately determined in accordance with factors such as the molecular weight and melt viscosity of the unmodified liquid diene rubber (A') and the modified liquid diene rubber (A), but is usually 0.01 to 3 parts by mass per 100 parts by mass of all the monomers including a conjugated diene.

The organoalkali metal compound may be used in the form of an organoalkali metal amide by being reacted with a secondary amine such as dibutylamine, dihexylamine or dibenzylamine.

Polar compounds are usually used in anionic polymerization to control the microstructure of conjugated diene moieties without deactivating the reaction. Examples of the polar compounds include ether compounds such as dibutyl ether, tetrahydrofuran and ethylene glycol diethyl ether; tertiary amines such as tetramethylethylenediamine and trimethylamine; alkali metal alkoxides and phosphine compounds. The polar compound is usually used in an amount of 0.01 to 1000 mol relative to the organoalkali metal compound.

The temperature of the solution polymerization is usually in the range of -80 to 150°C, preferably in the range of 0 to 100°C, and more preferably in the range of 10 to 90°C. The polymerization mode may be batchwise or continuous.

The polymerization reaction may be terminated by the addition of a polymerization terminator. Examples of the polymerization terminators include alcohols such as methanol and isopropanol. The unmodified liquid diene rubber (A') may be isolated by pouring the polymerization reaction solution obtained into a poor solvent such as methanol to precipitate the unmodified liquid diene rubber (A'), or by washing the polymerization reaction solution with water, followed by separation and drying.

Among the above processes for the production of the unmodified liquid diene rubber (A'), the solution polymerization is preferable.

The unmodified liquid diene rubber (A') is used in the form of a modified liquid diene rubber (A) after being modified with a functional group (a) derived from an acid anhydride. Examples of the functional groups derived from an acid anhydride include acid anhydride groups such as unsaturated carboxylic acid anhydride groups, and unsaturated carboxylate ester groups, unsaturated carboxylic acid amide groups and unsaturated carboxylic acid imide groups each derived from the acid anhydride groups described above.

The modified liquid diene rubber (A) may be produced by any method without limitation. For example, it may be produced by a graft reaction in which a compound that corresponds to the functional group (a) derived from an acid anhydride is added as a modifying agent to the unmodified liquid diene rubber (A').

Examples of the compounds corresponding to unsaturated carboxylic acid anhydride groups include unsaturated carboxylic acid anhydrides such as maleic anhydride and itaconic anhydride. Of these compounds, maleic anhydride is preferable.

Examples of the compounds corresponding to unsaturated carboxylate ester groups include unsaturated carboxylate esters such as maleate esters, fumarate esters, itaconate esters, glycidyl (meth)acrylate and hydroxyethyl (meth)acrylate.

Examples of the compounds corresponding to unsaturated carboxylic acid amide groups include unsaturated carboxylic acid amides such as maleic acid amides, fumaric acid amides and itaconic acid amides.

Examples of the compounds corresponding to unsaturated carboxylic acid imide groups include unsaturated

carboxylic acid imides such as maleic acid imides and itaconic acid imides.

Of the modified liquid diene rubbers (A), the following are preferable from the point of view of economic efficiency and also to ensure that the rubber composition of the present invention will fully exhibit its characteristics: a modified liquid diene rubber (A1) that has been modified with an unsaturated carboxylic acid anhydride, in which the unsaturated carboxylic acid anhydride is added as a modifying agent to the unmodified liquid diene rubber (A'); a modified liquid diene rubber (A2) having an unsaturated carboxylate ester group, obtained by further adding a compound having a hydroxyl group to the modified liquid diene rubber (A1); and a modified liquid diene rubber (A3) having an unsaturated carboxylic acid amide group, obtained by further adding a compound having an amino group to the modified liquid diene rubber (A1). The modified liquid diene rubber (A1) and the modified liquid diene rubber (A2) are preferable.

The modifying agent may be added to the unmodified liquid diene rubber (A') by any method without limitation. Examples of such a method include a method in which a reaction is performed to add a compound corresponding to the functional group (a) derived from an acid anhydride to the unmodified liquid diene rubber (A'). When the functional group (a) derived from an acid anhydride is an unsaturated carboxylic acid anhydride group, examples thereof include a method in which an unsaturated carboxylic acid anhydride, as well as a radical catalyst if necessary, is added and heated in the presence or absence of an organic solvent.

Examples of the organic solvents which are generally used in the above method include hydrocarbon solvents and halogenated hydrocarbon solvents. Of the organic solvents, hydrocarbon solvents such as n-butane, n-hexane, n-heptane, cyclohexane, benzene, toluene and xylene are preferable.

Examples of the radical catalysts used in the above method include di-s-butyl peroxydicarbonate, t-amyl peroxypivalate, t-amyl peroxy-2-ethylhexanoate and azobisisobutyronitrile. Of the radical catalysts, azobisisobutyronitrile is preferable.

Examples of the method described above also include a method in which an unsaturated carboxylic acid anhydride is added to the unmodified liquid diene rubber (A') to obtain a modified liquid diene rubber (A1) having an unsaturated carboxylic acid anhydride group as described above, and then, as mentioned above, compound having a hydroxyl group is further added to the modified liquid diene rubber (A1) to produce a modified liquid diene rubber (A2) having an unsaturated carboxylate ester group; and a method in which a compound having an amino group is further added to the modified liquid diene rubber (A1) to produce a modified liquid diene rubber (A3) having an unsaturated carboxylic acid amide group.

The compound having a hydroxyl group used in producing the modified liquid diene rubber (A2) is preferably water or an alcohol represented by $R^a$-OH (2) (wherein $R^a$ is a hydrogen atom or an optionally substituted alkyl group), and more preferably an alcohol.

The compound having an amino group used in producing the modified liquid diene rubber (A3) is preferably ammonia or an amine represented by $R^b_2$-NH (3) (wherein $R^b$ at each occurrence is a hydrogen atom or an optionally substituted alkyl group and may be the same as or different from one another).

When the modified liquid diene rubber (A) is a product of reaction of a liquid diene rubber that has been modified with an unsaturated carboxylic acid anhydride, and a compound represented by the chemical formula (2) or (3) above, in particular, an alcohol or a compound represented by the chemical formula (3) above, crosslinked products obtained from a rubber composition including such a reaction product tend to be more excellent in storage stability and more excellent in adhesion.

The details of the reason why the crosslinked products obtained have excellent storage stability are not known, but are assumed to be as follows. If the modified liquid diene rubber (A1) having an unsaturated carboxylic acid anhydride group is stored as it is, for example, it may react with water present in the air and become a modified liquid diene rubber having a highly polar functional group with a dicarboxylic acid structure. It is assumed that such a modified liquid diene rubber having a functional group with a dicarboxylic acid structure will have strong interactions, causing an increase in viscosity, and will not have excellent storage stability. On the other hand, when the modified liquid diene rubber (A1) having an unsaturated carboxylic acid anhydride group is reacted with an alcohol or a compound of (3), it does not become a dicarboxylic acid structure, and it is assumed that the viscosity increase, based on the strength of interactions mentioned above, will not occur.

The compound represented by the formula (2) is not particularly limited. From points of view such as the ease of the modification reaction, alcohols having 1 to 20 carbon atoms are preferable, saturated alcohols having 1 to 20 carbon atoms are more preferable, methanol, ethanol, propanol, butanol, and 3-methylbutanol are more preferable, and methanol and ethanol are still more preferable.

The compound represented by the formula (3) is not particularly limited. Examples thereof include methylamine, ethylamine, n-propylamine, isopropylamine, n-butylamine, sec-butylamine, tert-butylamine, n-amylamine, n-hexylamine, n-heptylamine, n-octylamine, n-nonylamine, n-decylamine, n-undecylamine, n-dodecylamine (laurylamine), n-tridecylamine, n-tetradecylamine, n-pentadecylamine, n-hexadecylamine, n-heptadecylamine, n-octadecylamine (stearylamine), n-nonadecylamine, allylamine, oleylamine, benzylamine, cyclohexylamine, aniline, nitroaniline, aminophenol, aminobenzoic acid, anisidine, ethoxyphenylamine, monochloroaniline, dichloroaniline, toluidine, xylidine, and ethylaniline, as well as mixtures of coconut amine, beef tallow amine, and others.

The compounds having a hydroxyl group and the compounds having an amino group may be used singly, or two or more may be used in combination.

In the modified liquid diene rubber (A), the functional group equivalent weight of the functional groups (a) derived from an acid anhydride is preferably 1,200 to 7,600 g/eq, more preferably 1,400 to 4,000 g/eq, still more preferably 1,700 to 3,100 g/eq, and even more preferably 2,000 to 2,500 g/eq. By virtue of the functional group equivalent weight of the functional groups (a) derived from an acid anhydride being in the above range, the modified liquid diene rubber (A) is excellent in adhesion with respect to other materials such as metals, and also in handling properties. In the present specification, the functional group equivalent weight of the functional groups (a) derived from an acid anhydride indicates the molecular weight per functional group (a).

The modified liquid diene rubber (A) having a functional group equivalent weight of the functional groups (a) in the specified range may be effectively produced by performing the addition reaction of the modifying agent at an appropriate reaction temperature for a sufficient amount of reaction time. For example, maleic anhydride is preferably added to the unmodified liquid diene rubber (A') at a reaction temperature of 100 to 200°C, and more preferably 120 to 180°C. The reaction time is preferably 3 to 200 hours, more preferably 4 to 100 hours, and still more preferably 5 to 50 hours.

The functional group equivalent weight of the functional groups (a) introduced in the modified liquid diene rubber (A) may be calculated based on the ratio of the modifying agent that has undergone the addition reaction, or may be determined with various analyzers such as infrared spectrometry and nuclear magnetic resonance spectrometry.

The ratio of the modifying agent that has undergone the addition reaction into the modified liquid diene rubber (A) is preferably 40 to 100 mol%, more preferably 60 to 100 mol%, still more preferably 80 to 100 mol%, and further preferably 90 to 100 mol%. When the addition reaction ratio is in the above range, the modified liquid diene rubber (A) that is obtained contains small amounts of residues of the modifying agent and low-molecular compounds derived from the modifying agent, and thus it is possible to reduce the adverse effects caused by such compounds, for example, such adverse effects as corrosion of metals probably ascribed to acidic components such as maleic anhydride. When, for example, an unsaturated carboxylic acid or an unsaturated carboxylic acid anhydride is used as the modifying agent, the ratio of the modifying agent that has undergone the addition reaction may be obtained by determining the amount of the unreacted modifying agent by, for example, comparing the acid values before and after washing of a sample of the modification reaction product.

The amount of the modifying agent added in the modified liquid diene rubber (A) is not limited in a strict sense. To ensure that a rubber composition that is obtained will fully exhibit its characteristics, however, the modification amount is preferably in the range of 0.05 to 40 parts by mass per 100 parts by mass of the unmodified liquid diene rubber (A'), and is more preferably in the range of 0.1 to 30 parts by mass, still more preferably in the range of 0.1 to 20 parts by mass, and even more preferably in the range of 0.1 to 10 parts by mass. If the amount of the modifying agent added is larger than 40 parts by mass, the modified liquid diene rubber (A) that is obtained tends to be problematic in handling properties, and if the amount is smaller than 0.05 parts by mass, the modified liquid diene rubber (A) that is obtained tends to exhibit lower adhesion with respect to other materials such as metals.

The amount of the modifying agent added in the modified liquid diene rubber (A) may be calculated based on the addition reaction ratio of the modifying agent, or may be determined with various analyzers such as infrared spectrometry and nuclear magnetic resonance spectrometry.

In the modified liquid diene rubber (A), the functional groups may be introduced at polymer ends or polymer side chains. The functional groups that are contained may be of a single kind, or may be a mixture of two or more kinds of functional groups. Thus, the modified liquid diene rubber (A) may be a product of modification with a single modifying agent, or a product of modification with two or more kinds of modifying agents.

The weight average molecular weight (Mw) of the modified liquid diene rubber (A) is 5,000 to 50,000, preferably 6,000 to 40,000, more preferably 6,000 to 38,000, still more preferably 9,000 to 36,000, and even more preferably 10,000 to 35,000. By virtue of the Mw of the modified liquid diene rubber (A) being in the above range, the modified liquid diene rubber (A) is excellent in handling properties, and a rubber composition including the same also has excellent properties. Also, when the Mw exceeds the upper limit value described above, the viscosity tends to be higher and the handling properties tend to be deteriorated. On the other hand, when the Mw is below the lower limit value described above, sufficient bond strength tends not to be obtained. In the present invention, the Mw is the polystyrene-equivalent number average molecular weight determined by GPC.

The molecular weight distribution (Mw/Mn) of the modified liquid diene rubber (A) is preferably 1.0 to 2.0, more preferably 1.0 to 1.5, still more preferably 1.0 to 1.2, and even more preferably 1.0 to 1.1. When the Mw/Mn is in the above range, the modified liquid diene rubber exhibits excellent handling properties at room temperature, and a composition that is obtained bleeds out no or a reduced amount of low-molecular components. The molecular weight distribution (Mw/Mn) is the ratio of weight average molecular weight (Mw) to number average molecular weight (Mn) measured by GPC relative to polystyrenes.

Some techniques for producing the modified liquid diene rubber (A) having the specified molecular weight distribution are to add an antioxidant during the addition reaction of the modifying agent described later, and to purify the unmodified liquid diene rubber (A') to sufficiently remove any components that will inhibit the addition reaction of the modifying agent. The purification method is preferably washing with water or warm water, an organic solvent such as methanol or acetone, or supercritical fluid carbon dioxide.

The modified liquid diene rubber (A) having the specified molecular weight distribution may be effectively synthesized involving the washing technique described above, and also by adding an antioxidant during the addition reaction of the modifying agent. Some preferred examples of the antioxidants used herein include 2,6-di-t-butyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphenyl)propionyloxy]ethyl]-2,4,8,10-tetraoxaspiro[5.5]undecane (AO-80), 2,4-bis[(octylthio)methyl]-6-methylphenol (Irganox 1520L), 2,4-bis[(dodecylthio)methyl]-6-methylphenol (Irganox 1726), 2-[1-(2-hydroxy-3,5-di-t-pentylphenyl)ethyl]-4,6-di-t-pentylphenyl acrylate (Sumilizer GS), 2-t-butyl-6-(3-t-butyl-2-hydroxy-5-methylbenzyl)-4-methylphenyl acrylate (Sumilizer GM), 6-t-butyl-4-[3-(2,4,8,10-tetra-t-butyldibenzo[d,f] [1,3,2]dioxaphosphepin-6-yloxy)propyl]-2-methylphenol (Sumilizer GP), tris(2,4-di-t-butylphenyl) phosphite (Irgafos 168), dioctadecyl 3,3'-dithiobispropionate, hydroquinone, p-methoxyphenol, N-phenyl-N'-(1,3-dimethylbutyl)-p-phenylenediamine (NOCRAC 6C), bis(2,2,6,6-tetramethyl-4-piperidyl) sebacate (LA-77Y), N,N-dioctadecylhydroxylamine (Irgastab FS 042), and bis(4-t-octylphenyl)amine (Irganox 5057). Of these antioxidants, from the point of view of improving the storage stability of the modified liquid diene rubber (A) that is obtained (further suppressing polymerization (typically, multimerization reaction)), amine antioxidants, N-phenyl-N'-(1,3-dimethylbutyl)-p-phenylenediamine (NOCRAC 6C), N,N-dioctadecylhydroxylamine (Irgastab FS 042), and bis(4-t-octylphenyl)amine (Irganox 5057) are preferable, and among them, N-phenyl-N'-(1,3-dimethylbutyl)-p-phenylenediamine (NOCRAC 6C) is still more preferable. The antioxidants may be used singly, or two or more may be used in combination.

The antioxidant is preferably added in an amount of 0.01 to 10 parts by mass, and more preferably 0.1 to 3 parts by mass per 100 parts by mass of the unmodified liquid diene rubber (A') or the modified liquid diene rubber (A).

Further, the modified liquid diene rubber (A) having the specified molecular weight distribution may be effectively synthesized also by appropriately controlling the temperature during the addition reaction of the modifying agent. For example, maleic anhydride may be preferably added to the unmodified liquid diene rubber (A') at a reaction temperature of 100 to 200°C, and more preferably 120°C to 180°C.

The glass transition temperature (Tg) of the modified liquid diene rubber (A) is variable depending on factors such as the vinyl content in the conjugated diene units, the type of the conjugated diene and the content of units derived from monomers other than conjugated dienes, but is preferably -100 to 30°C, more preferably -100 to 20°C, and still more preferably -100 to 10°C. When the Tg is in this range, for example, a rubber composition including the modified liquid diene rubber (A) attains good processability and adhesion, and also exhibits a viscosity that is not excessively high and thus can be handled easily.

The modified liquid diene rubbers (A) may be used singly, or two or more may be used in combination.

The melt viscosity of the modified liquid diene rubber (A) at 38°C is preferably in the range of 3 to 400 Pa·s, more preferably in the range of 5 to 300 Pa·s, and still more preferably in the range of 10 to 250 Pa·s. By virtue of the melt viscosity of the modified liquid diene rubber (A) at 38°C being in the above range, the modified liquid diene rubber (A) and a composition thereof attain good handling properties. In the present invention, the value of the melt viscosity is measured with a Brookfield viscometer.

[Rubber compositions]

A rubber composition of the present invention includes the modified liquid diene rubber (A) described hereinabove as a rubber component. The rubber composition of the present invention may include components other than the modified liquid diene rubber (A).

[Crosslinking agents]

The rubber composition of the present invention may further contain a crosslinking agent for crosslinking the rubber components including the modified liquid diene rubber (A). Examples of the crosslinking agents include sulfur, sulfur compounds, oxygen, organic peroxides, phenolic resins, amino resins, quinone and quinone dioxime derivatives, halogen compounds, aldehyde compounds, alcohol compounds, epoxy compounds, metal halides and organometal halides, and silane compounds.

Examples of the sulfur compounds include morpholine disulfides and alkylphenol disulfides.

Examples of the organic peroxides include cyclohexanone peroxide, methyl acetoacetate peroxide, tert-butyl peroxyisobutyrate, tert-butyl peroxybenzoate, benzoyl peroxide, lauroyl peroxide, dicumyl peroxide, di-tert-butyl peroxide and 1,3-bis(tert-butylperoxyisopropyl)benzene.

From the point of view of excellent corrosion resistance of the rubber composition of the present invention, of these crosslinking agents, organic peroxides are one preferred form. When crosslinked by organic peroxides in the coating step or other steps for automobiles, corrosion of metals, plastics, or other materials can be reduced.
The crosslinking agents may be used singly, or two or more may be used in combination.
The content of the crosslinking agent, from the point of view of the mechanical properties of crosslinked products, is preferably 0.1 to 10 parts by mass, more preferably 0.5 to 10 parts by mass, and still more preferably 0.8 to 10 parts by mass per 100 parts by mass of the rubber components including the modified liquid diene rubber (A).
When, for example, the crosslinking agent for crosslinking (vulcanizing) the rubber is sulfur, a sulfur compound, or another compound, the rubber composition of the present invention may further contain a vulcanization accelerator. Examples of the vulcanization accelerators include guanidine compounds, sulfenamide compounds, thiazole compounds, thiuram compounds, thiourea compounds, dithiocarbamic acid compounds, aldehyde-amine compounds, aldehyde-ammonia compounds, imidazoline compounds and xanthate compounds.
The vulcanization accelerators may be used singly, or two or more may be used in combination.
The content of the vulcanization accelerator is preferably 0.1 to 15 parts by mass, and more preferably 0.1 to 10 parts by mass per 100 parts by mass of the rubber components including the modified liquid diene rubber (A).
When, for example, the crosslinking agent for crosslinking (vulcanizing) the rubber is sulfur, a sulfur compound, or another compound, the rubber composition of the present invention may further contain a vulcanization aid. Examples of the vulcanization aids include fatty acids such as stearic acid, metal oxides such as zinc oxide, and fatty acid metal salts such as zinc stearate.
The vulcanization aids may be used singly, or two or more may be used in combination.
The content of the vulcanization aid is preferably 0.1 to 15 parts by mass, and more preferably 0.5 to 10 parts by mass relative to the rubber components including the modified liquid diene rubber (A).

[Solid rubbers (B)]

The rubber composition of the present invention may include a solid rubber.
When the rubber composition of the present invention includes the modified liquid diene rubber (A) and a solid rubber (B), the rubber components are constituted by the modified liquid diene rubber (A) and the solid rubber (B) described below. The rubber components may include 1 to 99 mass% of the modified liquid diene rubber (A) and 99 to 1 mass% of the solid rubber (B), and preferably include 1 to 95 mass% of the modified liquid diene rubber (A) and 99 to 5 mass% of the solid rubber (B), more preferably 10 to 90 mass% of the modified liquid diene rubber (A) and 90 to 10 mass% of the solid rubber (B), and still more preferably 20 to 80 mass% of the modified liquid diene rubber (A) and 80 to 20 mass% of the solid rubber (B). By virtue of the proportions of the modified liquid diene rubber (A) and the solid rubber (B) being in the above range, the rubber composition attains good breaking strength, elongation at break, and adhesion.
The solid rubber (B) used in the rubber composition of the invention is a rubber that can be handled as a solid at 20°C. The Mooney viscosity $ML_{1+4}$ of the solid rubber (B) at 100°C is usually in the range of 20 to 200. Examples of the solid rubbers (B) include natural rubbers, polyisoprene rubbers, polybutadiene rubbers, styrene-butadiene copolymer rubbers, styrene-isoprene copolymer rubbers, acrylonitrile-butadiene copolymer rubbers, chloroprene rubbers, ethylenepropylene rubbers and butyl rubbers.
To ensure that the rubber composition that is obtained will fully exhibit its characteristics, the weight average molecular weight (Mw) of the solid rubber (B) is preferably not less than 80,000, and more preferably in the range of 100,000 to 3,000,000.
Examples of the natural rubbers include those natural rubbers, high-purity natural rubbers and modified natural rubbers such as epoxidized natural rubbers, hydroxylated natural rubbers, hydrogenated natural rubbers and grafted natural rubbers which are generally used in the tire industry, with specific examples including TSRs such as SMRs, SIRs and STRs, and RSSs. In particular, SMR 20, STR 20 and RSS #3 are preferable from the points of view of uniform quality and high availability. The natural rubbers may be used singly, or two or more may be used in combination.
Examples of the polyisoprene rubbers include commercially available polyisoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to solution-polymerized styrene-butadiene copolymer rubbers (hereinafter, also written as S-SBRs). Ziegler-catalyzed polyisoprene rubbers are preferable because they have a high cis content. Use may be made of ultrahigh-cis polyisoprene rubbers obtained using lanthanoid rare earth metal catalysts.
The vinyl content in the polyisoprene rubbers is preferably not more than 50 mass%, more preferably not more than 40 mass%, and still more preferably not more than 30 mass%. If the vinyl content exceeds 50 mass%, the rubber composition tends to be deteriorated in flexibility at low temperatures. The lower limit of the vinyl content is not particularly

limited. The glass transition temperature, although variable depending on the vinyl content, is preferably not more than -20°C, and more preferably not more than -30°C.

The weight average molecular weight (Mw) of the polyisoprene rubbers is preferably 90,000 to 2,000,000, and more preferably 150,000 to 1,500,000. When the Mw is in this range, good processability and high mechanical strength are obtained.

As long as the advantageous effects of the invention are not impaired, the polyisoprene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

Examples of the polybutadiene rubbers include commercially available polybutadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to S-SBRs. Ziegler-catalyzed polybutadiene rubbers are preferable because they have a high cis content. Use may be made of ultrahigh-cis polybutadiene rubbers obtained using lanthanoid rare earth metal catalysts.

The vinyl content in the polybutadiene rubbers is preferably not more than 50 mass%, more preferably not more than 40 mass%, and still more preferably not more than 30 mass%. If the vinyl content exceeds 50 mass%, the rubber composition tends to be deteriorated in flexibility at low temperatures. The lower limit of the vinyl content is not particularly limited. The glass transition temperature, although variable depending on the vinyl content, is preferably not more than -40°C, and more preferably not more than -50°C.

The weight average molecular weight (Mw) of the polybutadiene rubbers is preferably 90,000 to 2,000,000, and more preferably 150,000 to 1,500,000. When the Mw is in this range, good processability and high mechanical strength are obtained.

As long as the advantageous effects of the invention are not impaired, the polybutadiene rubbers may have branched partial structures or polar functional groups that are introduced by using polyfunctional modifiers, for example, tin tetrachloride, silicon tetrachloride, alkoxysilanes having an epoxy group in the molecule, or amino group-containing alkoxysilanes.

Any styrene-butadiene copolymer rubbers (hereinafter, also written as SBRs) may be used appropriately in accordance with factors such as use applications. Specifically, those having a styrene content of 0.1 to 70 mass% are preferable, and the styrene content is more preferably 5 to 50 mass%, and still more preferably 10 to 40 mass%. Further, those rubbers having a vinyl content of 0.1 to 60 mass% are preferable, and those having a vinyl content of 0.1 to 55 mass% are more preferable.

The weight average molecular weight (Mw) of the SBRs is preferably 100,000 to 2,500,000, more preferably 150,000 to 2,000,000, and still more preferably 200,000 to 1,500,000. When the weight average molecular weight is in this range, processability and mechanical strength can be satisfied concurrently.

The glass transition temperature of the SBRs used in the present invention, as measured by differential thermal analysis, is preferably -95 to 0°C, and more preferably -95 to -5°C. When the glass transition temperature is in this range, the material exhibits a viscosity that is not excessively high and thus can be handled easily.

SBR which may be used in the invention may be obtained by copolymerizing styrene and butadiene. The SBR production process is not particularly limited and may be any of emulsion polymerization, solution polymerization, gas-phase polymerization and bulk polymerization. Of these production processes, emulsion polymerization and solution polymerization are preferable.

An emulsion-polymerized styrene-butadiene copolymer rubber (hereinafter, also written as E-SBR) may be produced by a usual emulsion polymerization process that is known or is deemed as known. For example, such a rubber may be obtained by emulsifying and dispersing predetermined amounts of styrene and butadiene monomers in the presence of an emulsifier and emulsion polymerizing the monomers with a radical polymerization initiator.

S-SBR may be produced by a usual solution polymerization process. For example, styrene and butadiene are polymerized in a solvent with an active metal capable of catalyzing anionic polymerization optionally in the presence of a polar compound as desired.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is usually preferable to use the solvent in such an amount that the monomer concentration will be 1 to 50 mass%.

Examples of the active metals capable of catalyzing anionic polymerization include alkali metals such as lithium, sodium and potassium; alkaline-earth metals such as beryllium, magnesium, calcium, strontium and barium; and lanthanoid rare earth metals such as lanthanum and neodymium. Of these active metals, alkali metals and alkaline-earth metals are preferable, and alkali metals are more preferable. Of the alkali metals, organoalkali metal compounds are more preferably used.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount in which the organoalkali metal compounds are used may be determined appropriately in accordance with the desired molecular weight of S-SBR.

The organoalkali metal compound may be used in the form of an organoalkali metal amide by being subjected to a reaction with a secondary amine such as dibutylamine, dihexylamine or dibenzylamine.

The polar compounds are not particularly limited as long as the compounds do not deactivate the anionic polymerization reaction and are generally used for the purposes of controlling the microstructure of butadiene moieties and controlling the distribution of styrene in copolymer chains. Examples include ether compounds such as dibutyl ether, tetrahydrofuran and ethylene glycol diethyl ether; tertiary amines such as tetramethylethylenediamine and trimethylamine; alkali metal alkoxides and phosphine compounds.

The temperature of the polymerization reaction is usually in the range of -80 to 150°C, preferably 0 to 100°C, and more preferably 30 to 90°C. The polymerization mode may be batchwise or continuous. To enhance the random copolymerizability of styrene and butadiene, it is preferable to supply styrene and butadiene into the reaction liquid continuously or intermittently so that styrene and butadiene in the polymerization system will have a specific compositional ratio.

The polymerization reaction may be terminated by the addition of an alcohol such as methanol or isopropanol as a polymerization terminator. After the termination of the polymerization reaction, the target S-SBR may be recovered by separating the solvent from the polymer solution by a method such as direct drying or steam stripping. The polymer solution may be mixed together with an extender oil before the removal of the solvent, and the rubber may be recovered as an oil-extended rubber.

As long as the advantageous effects of the invention are not impaired, the SBR may be a modified SBR obtained by introducing functional groups into SBR. Examples of the functional groups include amino groups, alkoxysilyl groups, hydroxyl groups, epoxy groups and carboxyl groups.

For example, the modified SBR may be produced by adding, before the addition of the polymerization terminator, an agent capable of reacting with active ends of the polymer, for example, a coupling agent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a chain end-modifying agent such as 4,4'-bis(diethylamino)benzophenone or N-vinylpyrrolidone, or any of the modifying agents described in JP2011-132298A.

In the modified SBR, the functional groups may be introduced at polymer ends or polymer side chains.

The styrene-isoprene copolymer rubbers, the acrylonitrile-butadiene copolymer rubbers, the chloroprene rubbers, the ethylene propylene rubbers (such as EPMs and EPDMs), and the butyl rubbers may be commercial products without limitation.

[Fillers]

The rubber composition of the present invention may include a filler. Fillers may be added for purposes such as to enhance the mechanical strength, to improve properties such as heat resistance or weather resistance, to control the hardness, and to increase the bulk of rubber. Examples of the fillers include inorganic fillers such as calcium carbonate, calcium oxide, magnesium hydroxide, magnesium oxide, magnesium carbonate, aluminum hydroxide, barium sulfate, barium oxide, titanium oxide, iron oxide, zinc oxide, zinc carbonate, clays including pyrophyllite clay, kaolin clay and calcined clay, mica, diatomaceous earth, carbon black, silica, glass fibers, carbon fibers, fibrous fillers and glass balloons, resin particles and synthetic fibers formed of resins such as crosslinked polyesters, polystyrenes, styrene-acrylic copolymer resins and urea resins, and natural fibers.

When the filler is particles, the shape of the particles may be selected from various shapes such as spheres in accordance with factors such as desired properties. When the filler is particles, the particles may be solid particles, hollow particles, or core-shell particles composed of a plurality of materials or the like, in accordance with factors such as desired properties. The surface of the fillers may be treated with various compounds such as fatty acids, resin acids, fatty acid esters and silane coupling agents.

Of the fillers, calcium carbonate, carbon black and silica are preferable from points of view such as reinforcement of the rubber composition that is obtained and crosslinked products thereof, prices and handleability. Calcium carbonate and carbon black are more preferable. The fillers may be used singly, or two or more may be used in combination.

In the rubber composition of the present invention, the content of the filler per 100 parts by mass of the rubber components including the modified liquid diene rubber (A) is preferably 0.1 to 1500 parts by mass, more preferably 1 to 1300 parts by mass, still more preferably 5 to 1000 parts by mass, and even more preferably 10 to 800 parts by mass.

When the content of the filler is in the above range, the rubber composition exhibits good processability and high adhesion.

[Oils]

The rubber composition of the present invention may include an oil. Oils may be added mainly to enhance the processability of the rubber composition of the invention, to enhance the dispersibility of other ingredients, and to control the characteristics of the rubber composition to desired ranges. Examples of the oils include mineral oils, vegetable oils and synthetic oils.
Examples of the mineral oils include paraffinic oils, naphthenic oils and aromatic oils. Examples of the vegetable oils include castor oils, cottonseed oils, linseed oils, rapeseed oils, soybean oils, palm oils, coconut oils and peanut oils. Examples of the synthetic oils include ethylene·α-olefin oligomers and liquid paraffins.
Of the oils, paraffinic oils, naphthenic oils and aromatic oils are preferable, and naphthenic oils are more preferable.
The oils may be used singly, or two or more may be used in combination.
In the rubber composition of the present invention, the content of the oil per 100 parts by mass of the rubber components including the modified liquid diene rubber (A) is preferably 0.1 to 500 parts by mass, more preferably 1 to 450 parts by mass, still more preferably 5 to 400 parts by mass, and even more preferably 8 to 350 parts by mass. When the content of the oil is in the above range, the rubber composition exhibits good processability and high adhesion.

[Other components]

For the purpose of improving properties such as processability and fluidity, the rubber composition of the invention may contain tackifying resins as required such as aliphatic hydrocarbon resins, alicyclic hydrocarbon resins, C9 resins, rosin resins, coumarone-indene resins and phenolic resins, without impairing the advantageous effects of the invention.
For the purpose of enhancing properties such as weather resistance, heat resistance and oxidation resistance, the rubber composition of the invention may contain additives as required while still achieving the advantageous effects of the invention. Examples of such additives include antioxidants, oxidation inhibitors, light stabilizers, scorch inhibitors, functional group-containing compounds, waxes, lubricants, plasticizers, processing aids, pigments, coloring matters, dyes, other colorants, flame retardants, antistatic agents, matting agents, antiblocking agents, UV absorbers, release agents, foaming agents, antibacterial agents, mildew-proofing agents, perfumes, dispersants and solvents.
Examples of the oxidation inhibitors include hindered phenol compounds, phosphorus compounds, lactone compounds and hydroxyl compounds.
Examples of the antioxidants include amine-ketone compounds, imidazole compounds, amine compounds, phenolic compounds, sulfur compounds and phosphorus compounds.
Functional group-containing compounds may be added for the purpose of enhancing, for example, the adhesion and adhesiveness of the rubber composition with respect to adherends. Examples of the functional group-containing compounds include functional group-containing alkoxysilanes such as N-β-(aminoethyl)-γ-aminopropyltrimethoxysilane and γ-glycidoxypropyltrimethoxysilane, and functional group-containing acrylates and methacrylates such as 2-hydroxyethyl acryloyl phosphate, 2-hydroxyethyl methacryloyl phosphate, nitrogen-containing acrylate and nitrogen-containing methacrylate. From the points of view of adhesion and adhesiveness, the functional group in a preferred embodiment is an epoxy group.
Examples of the pigments include inorganic pigments such as titanium dioxide, zinc oxide, ultramarine, red iron oxide, lithopone, lead, cadmium, iron, cobalt, aluminum, hydrochloride salts and sulfate salts; and organic pigments such as azo pigments and copper phthalocyanine pigments.
Examples of the antistatic agents include hydrophilic compounds such as quaternary ammonium salts, polyglycols and ethylene oxide derivatives.
Examples of the flame retardants include chloroalkyl phosphates, dimethyl-methyl phosphonate, bromine-phosphorus compounds, ammonium polyphosphates, neopentyl bromide polyethers and brominated polyethers. The additives may be used singly, or two or more may be used in combination.

[Methods for producing rubber compositions]

The rubber composition of the invention may be produced by any methods without limitation as long as the components described hereinabove can be mixed together homogeneously. The mixing may be performed at atmospheric pressure in an air atmosphere, but is preferably carried out at a reduced pressure or in a nitrogen atmosphere to prevent trapping of air into the composition during the mixing. The rubber composition of the invention obtained by uniformly dispersing the components is preferably stored in a container such as a hermetic container until actual use.

[Sealing materials]

In a preferred embodiment, the rubber composition of the present invention is used as a sealing material. In such a case, using it as a crosslinked product described below is a preferred embodiment.

[Crosslinked products]

A crosslinked product may be obtained by applying the rubber composition of the invention as required to a surface such as a substrate, for example, an oil-coated steel plate, and crosslinking the composition. The rubber composition may be crosslinked under conditions selected appropriately in accordance with factors such as use applications. For example, a crosslinked product may be produced by performing the crosslinking reaction at a temperature in the range of 130°C to 250°C for 10 minutes to 60 minutes. When, for example, the rubber composition of the invention is used on automobile manufacturing lines, the rubber composition of the invention may be applied to desired portions of various members (for example, into gaps between flanges of a plurality of frame members), and may be thereafter crosslinked by heat which is generated during the baking and drying of automobile bodies in the electrodeposition coating step, thereby forming crosslinked products at the desired portions.

The crosslinked products obtained from the rubber composition of the present invention are excellent in adhesion evaluated in terms of shear bond strength, and may be suitably used for articles such as, for example, automobile parts.

EXAMPLES

The present invention will be described in further detail by presenting Examples hereinbelow. However, it should be construed that the scope of the present invention is not limited to such Examples.

The following are the components used in Examples and Comparative Examples.

<Modified liquid diene rubbers (A)>

Modified liquid diene rubbers obtained in Production Examples 1 to 2 and Reference Production Examples 1 to 2 described later

<Unmodified liquid diene rubbers (A')>

Unmodified liquid diene rubbers obtained in Comparative Production Examples 1 to 2 described later

<Solid rubber>

Butadiene rubber: "BR01" (manufactured by JSR Corporation), 1,4-cis bonds 95%, weight average molecular weight 520,000, Tg -103°C

<Crosslinking agents>

Dicumyl peroxide: "PERCUMYL D" (manufactured by NOF CORPORATION) half life temperature for 1 minute 175°C
Sulfur: "MUCRON OT-20" (manufactured by SHIKOKU

CHEMICALS CORPORATION)

<Vulcanization aids>

Stearic acid: "LUNAC S-20" (manufactured by Kao Corporation)
Zinc oxide: Zinc oxide (manufactured by Sakai Chemical Industry Co., Ltd.)

<Vulcanization accelerator>

Vulcanization accelerator: "Nocceler NS" (manufactured by Ouchi Shinko Chemical Industrial Co., Ltd.)

<Oxidation inhibitor>

Oxidation inhibitor: "Nocrac NS-6" (manufactured by Ouchi Shinko Chemical Industrial Co., Ltd.)

<Filler>

Calcium carbonate: "Escalon #200" (manufactured by Sankyo Seifun K.K.), specific surface area 11000 $cm^2/g$, average particle size 4.0 $\mu m$, apparent density 0.42 g/mL

Comparative Production Example 1: Liquid polybutadiene (A'-1)

A thoroughly dried pressure-resistant container was purged with nitrogen. The pressure-resistant container was then loaded with 1000 g of hexane and 29 g of n-butyllithium (a 1.6 mol/L hexane solution). The temperature was increased to 60°C. While performing stirring, 1000 g of butadiene was added, and the polymerization was performed for 1 hour while controlling the polymerization temperature at 60°C. The polymerization reaction was then terminated by the addition of methanol. A polymer solution was thus obtained. Water was added to the polymerization solution, and the mixture was stirred to wash the polymerization solution with water. The stirring was terminated. After the liquid had separated into the polymer solution phase and the aqueous phase, the water was removed. After the completion of washing, the polymerization solution was dried at 70°C for 12 hours to afford a liquid polybutadiene (hereinafter, also written as the "polymer (A'-1)"), which was an unmodified liquid diene rubber. The vinyl content of the liquid polybutadiene (A'-1) determined by $^1$H-NMR measurement was 10%.

Comparative Production Example 2: Maleic anhydride-modified liquid polyisoprene ($\alpha$-1)

A thoroughly dried pressure-resistant container was purged with nitrogen. The pressure-resistant container was then loaded with 1200 g of cyclohexane and 320 g of sec-butyllithium (a 1.06 mol/L hexane solution). The temperature was increased to 50°C. While performing stirring, 1200 g of isoprene was added, and the polymerization was performed for 1 hour while controlling the polymerization temperature at 50°C. The polymerization reaction was then terminated by the addition of methanol. A polymer solution was thus obtained. Water was added to the polymerization solution, and the mixture was stirred to wash the polymerization solution with water. The stirring was terminated. After the liquid had separated into the polymer solution phase and the aqueous phase, the water was removed. After the completion of washing, the polymerization solution was dried at 70°C for 24 hours to afford a liquid polyisoprene. The vinyl content of the liquid polyisoprene determined by $^1$H-NMR measurement was 7%. Subsequently, to 100 parts by mass of the obtained polymer, 1.5 parts by mass of maleic anhydride and 0.1 part by mass of BHT (2,6-di-t-butyl-4-methylphenol, manufactured by Honshu Chemical Industry Co., Ltd.) were added, and the mixture was reacted at 160°C for 20 hours to give a maleic anhydride-modified polyisoprene (hereinafter, also written as the "polymer ($\alpha$-1)"). The addition reaction ratio of maleic anhydride was determined by oxidation measurement to be at least 99%, and the equivalent weight of functional groups (a) derived from the acid anhydride in the polymer ($\alpha$-1) was 6,700 g/eq.

Production Example 1: Maleic anhydride-modified liquid polybutadiene (A-1)

5 Parts by mass of maleic anhydride and 0.1 part by mass of NOCRAC 6C (N-phenyl-N'-(1,3-dimethylbutyl)-p-phenylenediamine, Ouchi Shinko Chemical Industrial Co., Ltd.) were added to 100 parts by mass of the polymer (A'-1), and the mixture was reacted at 170°C for 24 hours to give a maleic anhydride-modified liquid polybutadiene (A-1) (hereinafter, also written as the "polymer (A-1)"). The addition reaction ratio of maleic anhydride was determined by acid value titration to be at least 95%, and the equivalent weight of functional groups (a) derived from the acid anhydride in the polymer (A-1) was 2,100 g/eq.

Production Example 2: Maleic anhydride-modified liquid polybutadiene methyl ester (A-2)

Methanol was added to the polymer (A-1) in a molar equivalent weight of 1.05 relative to the maleic anhydride groups in the polymer, and the mixture was reacted at 90°C for 10 hours to give a maleic anhydride-modified liquid polybutadiene methyl ester (A-2) (hereinafter, also written as the "polymer (A-2)"). The reaction ratio of the maleic anhydride-derived functional groups in the polymer (A-2) was determined by infrared absorption spectroscopy to be 100%.

Reference Production Example 1: Maleic anhydride-modified liquid polybutadiene (A-3)

A thoroughly dried pressure-resistant container was purged with nitrogen. The pressure-resistant container

was then loaded with 1800 g of cyclohexane and 210 g of sec-butyllithium (a 1.06 mol/L hexane solution). The temperature was increased to 50°C. While performing stirring, 960 g of butadiene was added, and the polymerization was performed for 1 hour while controlling the polymerization temperature at 50°C. The polymerization reaction was then terminated by the addition of methanol. A polymer solution was thus obtained. Water was added to the polymerization solution, and the mixture was stirred to wash the polymerization solution with water. The stirring was terminated. After the liquid had separated into the polymer solution phase and the aqueous phase, the water was removed. After the completion of washing, the polymerization solution was dried at 70°C for 12 hours to afford a liquid polybutadiene. The vinyl content of the liquid polybutadiene determined by $^1$H-NMR measurement was 22%. Subsequently, to 100 parts by mass of the obtained polymer, 8 parts by mass of maleic anhydride and 0.1 part by mass of NOCRAC 6C (N-phenyl-N'-(1,3-dimethylbutyl)-p-phenylenediamine, Ouchi Shinko Chemical Industrial Co., Ltd.) were added, and the mixture was reacted at 160°C for 20 hours to give a maleic anhydride-modified polybutadiene (hereinafter, also written as the "polymer (A-3)"). The addition reaction ratio of maleic anhydride was determined by oxidation measurement to be at least 99%, and the equivalent weight of functional groups (a) derived from the acid anhydride in the polymer (A-3) was 1200 g/eq.

Reference Production Example 2: Maleic anhydride-modified liquid polybutadiene methyl ester (A-4)

A thoroughly dried pressure-resistant container was purged with nitrogen. The pressure-resistant container was then loaded with 1000 g of hexane and 250 g of n-butyllithium (a 1.6 mol/L hexane solution). The temperature was increased to 60°C. While performing stirring, 1200 g of butadiene was added, and the polymerization was performed for 1 hour while controlling the polymerization temperature at 50°C. The polymerization reaction was then terminated by the addition of methanol. A polymer solution was thus obtained. Water was added to the polymerization solution, and the mixture was stirred to wash the polymerization solution with water. The stirring was terminated. After the liquid had separated into the polymer solution phase and the aqueous phase, the water was removed. After the completion of washing, the polymerization solution was dried at 70°C for 12 hours to afford a liquid polybutadiene. The vinyl content of the liquid polybutadiene determined by $^1$H-NMR measurement was 11%. Subsequently, to 100 parts by mass of the obtained polymer, 5 parts by mass of maleic anhydride and 0.1 part by mass of NOCRAC 6C (N-phenyl-N'-(1,3-dimethylbutyl)-p-phenylenediamine, Ouchi Shinko Chemical Industrial Co., Ltd.) were added, and the mixture was reacted at 170°C for 24 hours to give a maleic anhydride-modified liquid polybutadiene. The addition reaction ratio of maleic anhydride was determined by acid value titration to be at least 95%, and the equivalent weight of functional groups (a) derived from the acid anhydride in the polymer was 2000 g/eq. Methanol was added to the polymer in a molar equivalent weight of 1.05 relative to the maleic anhydride groups in the polymer, and the mixture was reacted at 90°C for 10 hours to give a maleic anhydride-modified liquid polybutadiene methyl ester (A-4) (hereinafter, also written as the "polymer (A-4)"). The reaction ratio of the maleic anhydride-derived functional groups in the polymer (A-4) was determined by infrared absorption spectroscopy to be 100%.

(Method for measuring vinyl content)

50 mg of the polymers obtained in Production Examples and others were dissolved in 1 ml of deuterated chloroform ($CDCl_3$) and the solutions were measured with $^1$H-NMR at 400 MHz. The number of scans was 512. From the chart obtained by the measurement, the vinyl content of each conjugated diene unit was determined according to the following method.

(1) Vinyl content of butadiene units in polymers obtained in Production Examples and others

Based on the integrated value of each of the following portions of the chart obtained from the above measurement, the molar percentages of 1,2-bonded butadiene units and vinylcyclopentane units (structural units represented by the formula (2)) were determined according to the following method. The vinyl content was defined as the sum of the molar percentage of 1,2-bonded butadiene units and the molar percentage of vinylcyclopentane units.

[Chem. 2]

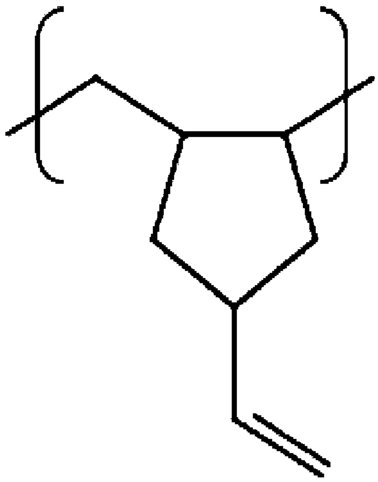

(2)

4.65 to 5.22 ppm portion: Portion A (synthetic spectrum derived from 1,2-bonded butadiene units and structural units represented by the formula (2))
5.22 to 5.68 ppm portion: Portion B (synthetic spectrum of 1,2-bonded butadiene units and 1,4-bonded butadiene units)
5.68 to 5.95 ppm portion: Portion C (spectrum derived from vinylcyclopentane units)

Molar percentage of 1,2-bonded butadiene units = [(Integrated value of portion A - Integrated value of portion B × 2)/2]/[(Integrated value of portion A - Integrated value of portion C × 2)/2 + [Integrated value of portion C - (Integrated value of portion A - Integrated value of portion C × 2)/2]/2 + Integrated value of portion C] × 100

Molar percentage of vinylcyclopentane units = Integrated value of portion C/{(Integrated value of portion A - Integrated value of portion C × 2)/2 + [Integrated value of portion C - (Integrated value of portion A - Integrated value of portion C × 2)/2]/2 + Integrated value of portion C} × 100

{Vinyl content (butadiene units)} = Molar percentage of 1,2-bonded butadiene units + Molar percentage of vinylcyclopentane units

(2) Vinyl content of isoprene units in polymers obtained in Production Examples and others

Based on the integrated value of each of the following portions of the chart obtained from the above measurement, the vinyl content was determined according to the following method.

4.52 to 4.79 ppm portion: Portion A' (synthetic spectrum of 3,4-bonded isoprene units)
5.60 to 6.00 ppm portion: Portion B' (synthetic spectrum of 1,2-bonded isoprene units)
4.79 to 5.55 ppm portion: Portion C' (synthetic spectrum of 1,4-bonded isoprene units)

{Vinyl content (isoprene units)} = {(Integrated value of portion A'/2) + (Integrated value of portion B')}/{(Integrated value of portion A'/2) + Integrated value of portion B' + Integrated value of portion C'}

(Method for measuring number average molecular weight (Mn), weight average molecular weight (Mw), and molecular weight distribution (Mw/Mn))

The Mn and Mw of the polymers obtained in Production Examples 1 to 2, Reference Production Examples 1 to 2, and Comparative Production Examples 1 to 2 were measured by GPC (gel permeation chromatography) relative to standard polystyrenes. The Mw/Mn was calculated from the values obtained. The measurement involved the following apparatus and conditions.

·Apparatus: GPC apparatus "HLC-8320 GPC" manufactured by TOSOH CORPORATION
·Separation column: Column "TSKgel Super HZ4000" manufactured by TOSOH CORPORATION
·Eluent: Tetrahydrofuran
·Eluent flow rate: 0.7 mL/min
·Sample concentration: 5 mg/10 mL
·Column temperature: 40°C

(Method for measuring melt viscosity)

The melt viscosity of the polymers obtained in Production Examples 1 to 2, Reference Production Examples 1 to 2, and Comparative Production Examples 1 to 2 was measured at 38°C with a Brookfield viscometer (manufactured by BROOKFIELD ENGINEERING LABS. INC.).

(Glass transition temperature)

In an aluminum open pan, 10 mg of the sample was placed, an aluminum lid was placed thereon, and the pan was crimped with a sample sealer. After cooling under the following conditions, the thermogram was measured by a differential scanning calorimeter (DSC) at a heat-up rate of 10°C/min. The peak top value of the DSC was adopted as the glass transition temperature (Tg). The measurement involved the following apparatuses and conditions.

[Measurement apparatuses and measurement conditions]

- Apparatus: Differential scanning calorimeter "DSC6200" manufactured by Seiko Instruments Inc.
- Cooling apparatus: Cooling controller manufactured by Seiko Instruments Inc.
- Detector: Heat flux type
- Sample weight: 10 mg
- Cooling conditions: Cooling to -130°C at a rate of 10°C/min (then held isothermally at -130°C for 3 minutes)
- Heat-up conditions: Heating up from -130°C at 10°C/min
- Reference container: Aluminum

- Reference weight: 0 mg

(Addition reaction ratio)

3 g of a sample after the modification reaction was dissolved by the addition of 180 mL of toluene and 20 mL of ethanol. The solution was titrated to neutrality with 0.1 N ethanol solution of potassium hydroxide, and thereby the acid value was determined.

$$\text{Acid value (meq/g)} = (A - B) \times F/S$$

A: Volume (mL) of 0.1 N ethanol solution of potassium hydroxide dropped until neutrality
B: Volume (mL) of 0.1 N ethanol solution of potassium hydroxide dropped to blank containing no sample
F: Potassium value of 0.1 N ethanol solution of potassium hydroxide
S: Mass (g) of sample weighed out

Separately, the sample after the modification reaction was washed with methanol (5 mL per 1 g of the sample) four times to remove the unreacted maleic anhydride. The sample was thereafter dried under reduced pressure at 80°C for 12 hours, and the acid value was determined in the same manner as described above. The addition reaction ratio of the modifying agent was calculated based on the following equation.

$$[\text{Addition reaction ratio (\%) of modifying agent}] = [\text{Acid value (meq/g) after washing}]/[\text{Acid value (meq/g) before washing}] \times 100$$

(Functional group equivalent weight)

Using the acid value after washing which had been determined above, the equivalent weight of functional groups (a) derived from the acid anhydride was calculated based on the following equation.

$$[\text{Equivalent weight (g/eq) of functional groups (a) derived from acid anhydride}] = 1{,}000/[\text{Acid value (meq/g) after washing}]$$

(Reaction ratio of acid anhydride groups)

When the acid anhydride-modified liquid diene rubber had been reacted with a compound represented by the chemical formula (2) or (3), the reaction ratio of the acid anhydride groups was calculated using the equation below based on infrared absorption spectra measured before and after the reaction with Fourier transform infrared spectrophotometer FT/IR-4200 (manufactured by JASCO Corporation).

$$[\text{Reaction ratio (\%) of acid anhydride groups}] = [1 - (\text{Peak intensity ratio of acid anhydride-derived functional groups after reaction})/(\text{Peak intensity ratio of acid anhydride-derived functional groups before reaction})] \times 100$$

In the case where the acid anhydride used in the reaction is maleic anhydride, a peak assigned to C=O stretching of the unreacted material arises near 1781 $cm^{-1}$, and this peak may be used in the determination of the intensity ratio relative to the peak assigned to the polymer main chain structure that is constant before and after the reaction.

[Table 1]

| | Number average molecular weight Mn | Weight average molecular weight Mw | Molecular weight distribution Mw/Mn | Monomer units constituting polymer |
|---|---|---|---|---|
| Comparative Production Example 1 (A'-1) | 27,000 | 28,000 | 1.03 | Butadiene 100 mass% |
| Comparative Production Example 2 (α-1) | 30,000 | 41,000 | 1.33 | Isoprene 100 mass% |
| Production Example 1 (A-1) | 28,000 | 31,000 | 1.11 | Butadiene 100 mass% |
| Production Example 2 (A-2) | 28,000 | 31,000 | 1.10 | Butadiene 100 mass% |
| Reference Production Example 1 (A-3) | 4,800 | 5,400 | 1.12 | Butadiene 100 mass% |
| Reference Production Example 2 (A-4) | 8,900 | 9,900 | 1.11 | Butadiene 100 mass% |

Table 1 (continued)

| | Glass transition temperature (°C) | Modifying agents | Functional group equivalent weight (g/eq) | Melt viscosity 38°C(Pa·s) |
|---|---|---|---|---|
| Comparative Production Example 1 (A'-1) | -93.5 | - | - | 40 |
| Comparative Production Example 2 (α-1) | -60.0 | Maleic anhydride | 6,700 | 120 |
| Production Example 1 (A-1) | -88.8 | Maleic anhydride | 2,100 | 95 |
| Production Example 2 (A-2) | -87.7 | Maleic anhydride Methanol | 2,100 | 197 |
| Reference Production Example 1 (A-3) | | Maleic anhydride | 1,200 | 2.1 |
| Reference Production Example 2 (A-4) | | Maleic anhydride Methanol | 2,000 | 4.3 |

(Examples 1 to 2 and Comparative Example 1)

The modified liquid diene rubbers (A) or the unmodified liquid diene rubber (A'), and the crosslinking agent were kneaded in the amounts (parts by mass) described in Table 2 to give rubber compositions. The rubber compositions obtained were tested by the method described below to evaluate properties. The results are described in Table 2.

The measurement method for evaluation is as described below.

(Shear bond strength)

The shear bond strength was measured in accordance with JIS K 6850. The test material used was a SPCC steel plate specified in JIS G3141, with a thickness of 1 mm, to which a corrosion inhibitor had been applied. The rubber composition was applied with a thickness of 0.15 mm onto the above steel plate, and was crosslinked at 150°C for 40 minutes to give a specimen, which was then tested to measure the shear bond strength. The stress rate in the measurement of the shear bond strength was 5 mm/min.

The data obtained in Examples and Comparative Example are values relative to the value of Comparative Example 1 taken as 100. The larger the value, the better the shear bond strength of the rubber composition.

[Table 2]

| | | | Example 1 | Example 2 | Comparative Example 1 |
|---|---|---|---|---|---|
| Amounts (parts by mass) | Modified liquid diene rubber (component A) | A-1 | 100 | | |
| | | A-2 | | 100 | |
| | Unmodified liquid diene rubber (A') | A'-1 | | | 100 |
| | Crosslinking agent | Dicumyl peroxide | 1 | 1 | 1 |
| Shear bond strength | | | 549 | 466 | 100 |

(Storage stability)

The modified liquid diene rubbers (A) obtained in Production Examples 1 to 2 were kept in a thermohygrostat bath at a temperature of 60°C and a humidity of 50% rh for 12 days, and the change over time in melt viscosity was measured. The test results of the storage stability of the modified liquid diene rubber obtained in Production Example 1 are described as Reference Example 1, and the test results of the storage stability of the modified liquid diene rubber obtained in Production Example 2 are described as Example 3 in Table 3.

[Table 3]

| | | Example 3 | Reference Example 1 |
|---|---|---|---|
| Modified liquid diene rubber (component A) | A-2 | 100 | |
| | A-1 | | 100 |
| Melt viscosity (Pa·s 38°C) | Day 0 | 197 | 95 |
| | 4 Days passed | 235 | 251 |
| | 7 Days passed | 240 | 664 |
| | 12 Days passed | 250 | Unmeasurable |

Comparing Examples 1 and 2 with Comparative Example 1, the use of liquid diene rubbers modified with the acid anhydride resulted in excellent adhesion to the metal. Comparing Example 3 with Reference Example 1, the modified liquid diene rubber obtained by reacting the acid anhydride-modified liquid rubber with the alcohol had more excellent storage stability.

(Examples 4 to 5 and Reference Examples 2 to 3)

The modified liquid diene rubbers (A) and the crosslinking agent were kneaded in the amounts (parts by mass) described in Table 4 to give rubber compositions. The rubber compositions obtained were tested by the method described below to evaluate properties. The results are described in Table 4.
The measurement method for evaluation is as described below.

(Bond strength)

The shear bond strength was measured in accordance with JIS K 6850. The test material used was a SPCC steel plate specified in JIS G3141, with a thickness of 1 mm, to which a corrosion inhibitor had been applied. The rubber composition was applied with a thickness of 0.2 mm onto the above steel plate, and was crosslinked at 180°C for 30 minutes to give a crosslinked product, which was then used as a specimen for measuring the shear bond strength. The stress rate in the measurement of the shear bond strength was 5 mm/min.
The data obtained in Examples and Reference Examples are values relative to the value of Reference Example 2 taken as 100. The larger the value, the better the shear bond strength of the rubber composition.

[Table 4]

| | | | Example 4 | Example 5 | Reference Example 2 | Reference Example 3 |
|---|---|---|---|---|---|---|
| Amounts (parts by mass) | Modified liquid diene rubber (component A) | A-1 | 100 | | | |
| | | A-2 | | 100 | | |
| | | A-3 | | | 100 | |
| | | A-4 | | | | 100 |
| | Crosslinking agent | Dicumyl peroxide | 1 | 1 | 1 | 1 |
| Shear bond strength | | | 1266 | 700 | 100 | 148 |

Example 4 and Example 5 had excellent shear bond strength. In addition, comparing these Examples with Reference Example 2 and Reference Example 3, their shear bond strength was more excellent than that of Reference Example 2 and Reference Example 3, partly due to their weight average molecular weight (Mw) being 10,000 or more.

(Example 6 and Comparative Example 2)

The modified liquid diene rubber (A) or the polymer (α-1), the crosslinking agent, the vulcanization aids, and the oxidation inhibitor were kneaded in the amounts (parts by mass) described in Table 5 to give rubber compositions. The rubber compositions obtained were tested by the method described below to evaluate properties. The results are described in Table 5.

The measurement method for evaluation is as described below.

(Heat resistance)

The heat resistance was evaluated by comparing the shear bond strength when the heating time was changed between 30 minutes and 90 minutes. The test material used was a SPCC steel plate specified in JIS G3141, with a thickness of 1 mm, to which a corrosion inhibitor had been applied. The rubber composition was applied with a thickness of 0.2 mm onto the above steel plate, and was subjected to crosslinking and heat treatment at 180°C for 30 minutes and for 90 minutes to give a crosslinked product, which was then used as a specimen for measuring the shear bond strength. The shear bond strength was measured in accordance with JIS K 6850. The stress rate in the measurement of the shear bond strength was 5 mm/min.

The change in shear bond strength before and after the heat treatment was calculated using the values of shear bond strength (I) after 30 minutes of curing and shear bond strength (II) after 90 minutes of heating, according to the calculation formula: ((II) - (I))/(I) × 100.

[Table 5]

| | | | Example 6 | Comparative Example 2 |
|---|---|---|---|---|
| Amounts (parts by mass) | Modified liquid diene rubber (component A) | A-1 | 100 | |
| | | α - 1 | | 100 |
| | Crosslinking agent | Sulfur | 3 | 3 |
| | Vulcanization aids | Nocceler NS | 1 | 1 |
| | | Zinc oxide | 3 | 3 |
| | | Stearic acid | 2 | 2 |
| | Oxidation inhibitor | NS-6 | 2 | 2 |
| Shear bond strength after 30 minutes of curing ($N/mm^2$)(I) | | | 0.127 | 0.145 |
| Shear bond strength after 90 minutes of heating ($N/mm^2$)(II) | | | 0.496 | 0.126 |
| Change in shear bond strength (%) | | | 291 | -13 |

Comparing Example 6 with Comparative Example 2, Example 6, in which the content of butadiene units in the modified liquid diene rubber (A) was 50% or more based on the total monomer units in the liquid diene rubber (A'), exhibited excellent heat resistance with no decrease in bond strength before and after the heat treatment.

(Example 7 and Reference Example 4)

The modified liquid diene rubbers (A), the diene rubber, and the filler were kneaded in the amounts (parts by mass) described in Table 6 to give rubber compositions. The rubber compositions obtained were tested by the method described below to evaluate properties. The results are described in Table 6.
The measurement method for evaluation is as described below.

(Storage stability (2))

The rubber composition obtained in Example 7 or Reference Example 4 was kept in a thermohygrostat bath at a temperature of 23°C and a humidity of 50% rh for 19 days, and the change over time in loss modulus G" was measured. The loss modulus G" was measured using a dynamic viscoelastometer ARES G2 manufactured by TA Instruments, Inc. The composition was charged in a cup with a plate diameter of 40 mm to a thickness of 1 mm. A parallel plate with a diameter of 25 mm was used for the upper part. Measurements were taken at a measurement temperature of 80°C and a strain of 0.1% while changing the frequency from 0.1 Hz to 100 Hz, and the loss modulus G" at 50 Hz is described in Table 6.

[Table 6]

| | | | Example 7 | Reference Example 4 |
|---|---|---|---|---|
| Amounts (parts by mass) | Modified liquid diene rubber (component A) | A-2 | 50 | |
| | | A-1 | | 50 |
| | Unmodified liquid diene rubber (A') | A'-1 | 50 | 50 |
| | Filler | Calcium carbonate | 100 | 100 |
| Loss modulus G" (MPa) | | Day 0 | 18 | 13 |
| | | 19 Days passed | 24 | 44 |

Comparing Example 7 with Reference Example 4, the modified liquid diene rubber obtained by reacting the acid anhydride-modified liquid rubber with the alcohol had more excellent storage stability.

(Examples 8 to 9 and Reference Examples 5 to 6)

The modified liquid diene rubbers (A), the solid rubber (B), the unmodified liquid diene rubber (A'), the filler, the crosslinking agent, and the oxidation inhibitor were kneaded in the amounts (parts by mass) described in Table 7 to give rubber compositions. The rubber compositions obtained were tested by the method described below to evaluate properties. The results are described in Table 7.
The measurement method for evaluation is as described below.

(Bond strength (2))

The shear bond strength was measured in accordance with JIS K 6850. The test material used was a SPCC steel plate specified in JIS G3141, with a thickness of 1 mm, to which a corrosion inhibitor had been applied. The rubber composition was applied with a thickness of 0.2 mm onto the above steel plate, and was crosslinked at 175°C for 30 minutes to give a crosslinked product, which was then used as a specimen for measuring the shear bond strength. The stress rate in the measurement of the shear bond strength was 5 mm/min.
The data obtained in Examples and Reference Examples are values relative to the value of Reference Example 5 taken as 100. The larger the value, the better the shear bond strength of the rubber composition.

[Table 7]

| | | | Example 8 | Example 9 | Reference Example 5 | Reference Example 6 |
|---|---|---|---|---|---|---|
| Amounts (parts by mass) | Modified liquid diene rubber (component A) | A-1 | 17 | | | |
| | | A-2 | | 17 | | |
| | | A-3 | | | 17 | |
| | | A-4 | | | | 17 |
| | Unmodified liquid diene rubber (A') | A'-1 | 66 | 66 | 66 | 66 |
| | Solid rubber (B) | Butadiene rubber | 17 | 17 | 17 | 17 |
| | Filler | Calcium carbonate | 133 | 133 | 133 | 133 |
| | Crosslinking agent | Dicumyl peroxide | 3 | 3 | 3 | 3 |
| | Oxidation inhibitor | NS-6 | 2 | 2 | 2 | 2 |
| Shear bond strength | | | 130 | 163 | 100 | 107 |

Example 8 and Example 9 had excellent shear bond strength. In addition, comparing these Examples with Reference Example 5 and Reference Example 6, their shear bond strength was more excellent than that of Reference Example 5 and Reference Example 6, partly due to their weight average molecular weight (Mw) being 10,000 or more.

INDUSTRIAL APPLICABILITY

The rubber compositions including the modified liquid diene rubbers (A) having a functional group (a) derived from an acid anhydride obtained in the present invention have excellent handling properties, as well as good adhesion evaluated in terms of shear bond strength. Therefore, they can be suitably used for sealing materials and are useful.

## Claims

**1.** A modified liquid diene rubber (A),

having a functional group (a) derived from an acid anhydride, and
containing butadiene units in an amount of 50 mass% or more based on the total monomer units,
wherein the polystyrene-equivalent weight average molecular weight (Mw) measured by gel permeation chromatography (GPC) is in the range of 5,000 to 50,000.

**2.** The modified liquid diene rubber (A) according to Claim 1, wherein the modified liquid diene rubber (A) is a product of reaction of a liquid diene rubber modified with an unsaturated carboxylic acid anhydride, and a compound represented by the chemical formula (2) or (3) below:

$R^a$-OH (2)

(wherein $R^a$ is a hydrogen atom or an optionally substituted alkyl group)

$R^b_2$-NH (3)

(wherein $R^b$ at each occurrence is a hydrogen atom or an optionally substituted alkyl group and may be the same as or different from one another).

**3.** The modified liquid diene rubber (A) according to Claim 1 or 2, wherein the weight average molecular weight (Mw)

is in the range of 10,000 to 35,000.

**4.** A rubber composition comprising the modified liquid diene rubber (A) described in any one of Claims 1 to 3.

**5.** The rubber composition according to Claim 4, further comprising a solid rubber (B).

**6.** The rubber composition according to Claim 4 or 5, further comprising a filler.

**7.** The rubber composition according to Claim 6, wherein the filler includes calcium carbonate.

**8.** The rubber composition according to any one of Claims 4 to 7, further comprising a crosslinking agent.

**9.** A sealing material obtained from the rubber composition described in any one of Claims 4 to 8.

**10.** A crosslinked product obtained from the rubber composition described in any one of Claims 4 to 8.

**11.** A sealing material obtained from the crosslinked product described in Claim 10.

**INTERNATIONAL SEARCH REPORT**

International application No.
PCT/JP2021/018012

A. CLASSIFICATION OF SUBJECT MATTER
C08C 19/00(2006.01)i; C08F 36/06(2006.01)i; C08L 15/00(2006.01)i
FI: C08C19/00; C08F36/06; C08L15/00

According to International Patent Classification (IPC) or to both national classification and IPC

B. FIELDS SEARCHED

Minimum documentation searched (classification system followed by classification symbols)
C08C19; C08F6-246; C08L

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2016/104473 A1 (KURARAY CO., LTD.) 30 June 2016 (2016-06-30) claims, paragraphs [0002], [0033], [0037], [0057], [0058], [0073], [0074], [0140], examples, production example 6 | 1, 3, 4, 9<br>5-8, 10, 11 |
| Y | WO 2019/069904 A1 (KURARAY CO., LTD.) 11 April 2019 (2019-04-11) claims, paragraphs [0002], [0032], [0063]-[0090], [0101] | 2, 5-8, 10, 11 |
| X<br>Y | JP 2019-104810 A (FUKOKU CO., LTD.) 27 June 2019 (2019-06-27) claims, paragraphs [0009], [0023] | 1, 4, 8, 9, 11<br>2 |
| X | JP 2019-77803 A (THE YOKOHAMA RUBBER CO., LTD.) 23 May 2019 (2019-05-23) claims, paragraphs [0068], [0088], [0090], examples | 1-6, 8-11 |
| X | JP 2019-194303 A (HITACHI ZOSEN CORP.) 07 November 2019 (2019-11-07) example 8, paragraph [0046] | 1, 3-8 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 July 2021 (07.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/018012

C (Continuation). DOCUMENTS CONSIDERED TO BE RELEVANT

| Category* | Citation of document, with indication, where appropriate, of the relevant passages | Relevant to claim No. |
|---|---|---|
| T | CRAY VALLEY 社製 Ricon131MA20 のカタログ, 13 July 2021 (retrieval date), URL:https://www.tomo-e.co.jp/upload/cProductsJA/25QU049-cProductsJA_content-001.pdf, page 3, non-official translation (Made by CRAY VALLEY, "Catalog of Ricon® 131 MA20") | 1, 3-8 |
| X<br>Y | JP 2005-8823 A (TOYO SEIKAN CO., LTD.) 13 January 2005 (2005-01-13) claims, paragraphs [0021], [0035], example 4 | 1, 3, 4<br>2 |
| Y | JP 2006-307208 A (KURARAY CO., LTD.) 09 November 2006 (2006-11-09) claims, paragraphs [0017], [0039] | 2 |

Form PCT/ISA/210 (continuation of second sheet) (January 2015)

**INTERNATIONAL SEARCH REPORT**
Information on patent family members

International application No.
PCT/JP2021/018012

| Patent Documents referred in the Report | Publication Date | Patent Family | Publication Date |
|---|---|---|---|
| WO 2016/104473 A1 | 30 Jun. 2016 | US 2018/0022835 A1<br>claims, paragraphs [0002], [0002], [0033], [0037], [0057], [0058], [0073], [0074], [0140], examples, production example 6<br>EP 3239182 A1<br>CN 107001490 A<br>KR 10-2017-0098236 A<br>TW 201630941 A | |
| WO 2019/069904 A1 | 11 Apr. 2019 | EP 3693399 A1<br>claims, paragraphs [0002], [0032], [0063]-[0090], [0101]<br>CN 111148767 A<br>KR 10-2020-0058434 A<br>TW 201922894 A | |
| JP 2019-104810 A | 27 Jun. 2019 | (Family: none) | |
| JP 2019-77803 A | 23 May 2019 | US 2020/0239603 A1<br>claims, paragraphs [0068], [0088] [0090], examples<br>WO 2019/082895 A1<br>CN 111278905 A | |
| JP 2019-194303 A | 07 Nov. 2019 | WO 2019/208028 A1 | |
| JP 2005-8823 A | 13 Jan. 2005 | (Family: none) | |
| JP 2006-307208 A | 09 Nov. 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S59006272 A
- JP 2011132298 A